# NEUE EUROPÄISCHE PATENTSCHRIFT

(11) **EP 3 235 370 B2**
(45) Veröffentlichungstag und Bekanntmachung des Hinweises auf die Entscheidung über den Einspruch: **01.06.2022**
(45) Hinweis auf die Patenterteilung: 20.06.2018
(21) Anmeldenummer: 17172439.6
(22) Anmeldetag: 17.09.2015
(51) Int. Cl.: A01G 24/23, A01G 24/28, A01G 24/44

(54) **HOLZFASERMATTE ZUR VERWENDUNG ALS PFLANZENSUBSTRAT**
WOOD FIBRE MAT FOR USE AS PLANT SUBSTRATE
TAPIS DE FIBRES DE BOIS DESTINE A ETRE UTILISE COMME SUBSTRAT VEGETAL

(43) Veröffentlichungstag der Anmeldung: 25.10.2017
(62) Teilanmeldung aus: 15185659.8
(73) Patentinhaber: SWISS KRONO Tec AG, 6004 Luzern (CH)
(72) Erfinder: PFEIFFER, Sabrina, 16866 Kyritz (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 1 097 630
- EP-A1- 1 457 107
- EP-A1- 3 143 870
- WO-A1-00/00017
- WO-A1-2009/011905
- WO-A1-2014/135681
- WO-A2-2006/117162
- WO-A2-2010/028037
- CN-A- 103 168 777
- DE-A1- 10 056 829
- DE-A1- 10 060 158
- DE-A1-102006 038 901
- JP-A- 2008 296 395
- US-A- 4 786 550
- US-A1- 2004 020 114
- US-A1- 2004 131 699
- US-A1- 2006 070 294
- US-A1- 2006 143 869
- US-A1- 2006 191 194
- US-A1- 2009 068 430
- US-A1- 2014 259 909
- Hochwertige Qualitätsfaser ET AL: "HANDELN WIR IM SINNE DER RESSOURCENSCHONUNG. LIGNOFIBRE", , 19. Januar 2015 (2015-01-19), XP055357364, Gefunden im Internet: URL:http://www.gramoflor.com/files/ansicht _lignofibre.pdf [gefunden am 2017-03-22]
- Polymilchsäurefasern: https://www.alibaba.com/product-detail/1-6 7dtex-38mm-polylactic-acod-pla_60213485882 .html

## Beschreibung

Die vorliegende Erfindung betrifft eine Holzfasermatte zur Verwendung als Pflanzensubstrat gemäß Anspruch 1, deren Verwendung gemäß Anspruch 11 und Verfahren zu deren Herstellung gemäß der Ansprüche 12 und 13.

### Beschreibung

In der Landwirtschaft und im Gartenbau werden insbesondere in Gewächshäusern mehr und mehr Produkte eingesetzt, die die Aufzucht von Pflanzen verbessern, erleichtern und verbilligen sollen. Ein wichtiger Aspekt ist in diesem Zusammenhang eine exakte Einstellung des Nährstoffgehaltes für die Pflanzen.

Ein Ansatz bildet in diesem Zusammenhang die Verwendung von geeigneten Substratkomponenten, die über gute Dränageeigenschaften in Verbindung mit einem geringen Nährstoffgehalt, hoher Strukturstabilität und guter Luftführung verfügen. Die gewünschten Werte für den Nährstoffgehalt und pH-Wert können durch Kalkung und Düngung exakt eingestellt werden.

Als traditionell bevorzugte Substratkomponente wird häufig Torf eingesetzt. Torf lässt sich gut und schnell verteilen und ist ein ideales Substratausgangsmaterial mit einstellbarer Wasserkapazität. Torf, insbesondere der Weißtorf, weist eine gute Luftführung auch bei Wassersättigung auf, während Schwarztorf über eine höhere Kationenaustauschkapazität und bessere pH-Pufferung verfügt. Torf wird traditionell aus Hochmooren und Niedermooren gewonnen, was in zunehmenden Maße ökologisch nicht vertretbar ist. Aufgrund des hohen Bedarfes an Torf werden diese zunehmend importiert, was zu hohen Kosten führt und ebenfalls im Abbauland ökologische Schäden hinterlässt.

Neben Torf ist eine Vielzahl von weiteren möglichen Substratkomponenten bekannt. So wird zunehmend der Einsatz von Xylit (Vorstufe der Braunkohle), mineralischen Substraten wie Vermiculit, poröses Vulkangestein, Ölschiefer oder auch Steinwolle diskutiert.

Die DE 10 2006 038 901 A1 offenbart ein biosynthetisches Substrat auf Basis von Zellulosefasern. In der DE 40 24 727 A1 wird ein Mineralwolleprodukt mit hydrophilen Eigenschaften zur Verwendung als Dünge- und Aufwuchsubstrat für Pflanzen beschrieben, welches sich insbesondere zur Dachbegrünung eignet. Das Hydrophilierungsmittel enthält neben einem hydrophoben Bindemittel eine wasserlösliche Stickstoff-Carbonyl-Verbindung, wie zum Beispiel Harnstoff, ein wässriges Mikrosol eines Acrylharzes und ein Tensid.

Die Mineralwolle kann auch mit Wasser absorbierenden Mitteln wie pyrogener Kieselsäure, Tonmineralien, Aluminiumoxid oder einem organischen Superabsorber wie z.B. einem Acrylamid/Acrylsäure-Copolymerisat zur Verbesserung des Wasserrückhaltevermögens versehen werden (DE 4035249 A1).

Insbesondere bei der Verwendung von Steinwolle bzw. Mineralwolle als Pflanzensubstrat, ergeben sich eine Reihe von Nachteilen. So ist die Herstellung von Steinwolle Energieintensiv, und eine ökologische Entsorgung ist nicht oder nur schwer möglich, z.B. ist die Beimengung von verkleinerter Steinwolle zu erdigen Substraten ökologisch umstritten. Zwar besteht die Möglichkeit der Wiederverwertung von Steinwolle durch Beimengung beispielsweise bei der Ziegelherstellung, insgesamt bleibt jedoch festzustellen, dass die Wiederverwertung von Steinwolle unzureichend gelöst ist.

Entsprechend stellt die Entsorgung der Substratkomponenten ein Problem dar, das sich sowohl vom Aufwand als auch von den Kosten negativ auf die Produkte auswirkt.

Als eine weitere Alternative für Substratkomponenten hat sich seit den 1990er Jahren die Verwendung von Holzfasern etabliert. Zunächst wurden Holzfasern als Torfersatzstoff in Blumenerden verwendet, besitzen mittlerweile jedoch eine wichtige Bedeutung als organische Substratkomponente im Gartenbau. Holzfasern kommen häufig in Mischungen mit reduzierten oder ohne Torfanteil zum Einsatz. Von allen Torfersatzstoffen ist die Holzfaser in ihren Eigenschaften dem Torf mit Ausnahme der Wasserkapazität am ähnlichsten. Holzfasern weisen dank ihrer Porenstrukturen eine deutlich höhere Luftkapazität als Torf auf und sind grundsätzlich Unkrautfrei. Die lockere Struktur der Holzfasern bedingt gute Dränageeigenschaften und macht die Substrate vergießfest bzw. strukturstabil. Ein verpresster Formkörper, insbesondere zur Pflanzenzucht oder -kultur, enthaltend mindestens ein Funktionsmaterial, ausgewählt aus der Gruppe der Holzfaserstoffe, zellstoffhaltigen Materialien und/oder Kokosmesokarpmaterialien ist aus der DE 100 60 158 A1 bekannt. Ein wesentlicher Nachteil der Holzfasern besteht allerdings darin, dass die hohe Luftkapazität zulasten einer vergleichsweise geringen Wasserkapazität geht.

Substratkomponenten auf Basis von Holzfasermatten haben zudem den Nachteil, dass sie bei hohen Feuchten bzw. Luftfeuchten zum Schimmel neigen und dann für eine mehrmalige Nutzung nicht zur Verfügung stehen.

Der vorliegenden Erfindung liegt daher die technische Aufgabe zugrunde, Holzfasern so auszustatten, dass die Wasserspeicherkapazität signifikant erhöht wird, wobei keine Vorprodukte eingesetzt werden sollen, die im Hinblick auf die Entsorgung problematisch sind. Weiter soll durch den Holzfasern zu zuführenden Inhaltsstoffen den auf den Holzfasern als Substratkomponente wachsenden Pflanzen ein Teil der benötigten Spurenelemente und Dünger zur Verfügung gestellt werden. Auch soll sich das Produkt im Hinblick auf sein gesamtes ökologisches Profil, wie Herstellung aus nachwachsenden Rohstoffen, geringer Energiebedarf bei der Herstellung, einfache Entsorgung wegen biologischer Abbaubarkeit positiv hervorheben. Zusätzlich soll das Produkt in der Nutzung bezüglich der Eigenschaften mit den aktuell sich auf dem Markt befindlichen Produkten vergleichbar sein. Das bedeutet, dass eine Mehrfachnutzung möglich ist, und das Substrat nicht durch Schimmel oder durch anderen unerwünschten Bewuchs nicht mehr nutzbar ist oder zerstört wird.

Diese Aufgabe wird erfindungsgemäß durch eine Holzfasermatte mit den Merkmalen des Anspruchs 1 und deren Herstellung in Verfahren gemäß der Ansprüche 12 und 13 gelöst.

Bei einer Verwendung der vorliegenden Holzfasermatte als Pflanzensubstratkomponente z.B. im Gartenbau, ergeben sich eine Vielzahl von Vorteilen. So ist durch die Zugabe eines geeigneten Absorptionsmittels die Wasserspeicherkapazität signifikant erhöht und eine bedarfsgerechte Wasserzufuhr ist möglich, d.h. die Pflanze kann die Wasserzufuhr entsprechend ihres Bedarfes steuern. Auch ermöglicht die vorliegende Holzfasermatte ein einfaches Bewässern ohne großen Automatisierungsaufwand und eine einfache, ökologische Entsorgung.

In einer Ausführungsform der vorliegenden Holzfasermatte ist das mindestens eine Absorptionsmittel gleichmäßig (homogen) oder ungleichmäßig (inhomogen) in der Holzfasermatte verteilt.

Im Falle einer homogenen Verteilung des Absorptionsmittels in der Holzfasermatte ist das mindestens eine Absorptionsmittel bevorzugt gleichmäßig über die gesamte Dicke bzw. Breite der Holzfasermatte verteilt. Entsprechend weist das Absorptionsmittel in diesem Falle eine gleichmäßige Konzentration in der Holzfasermatte auf.

Bevorzugterweise beträgt die Menge des Absorptionsmittels in der finalen Holzfasermatte bei einer gleichmäßigen Verteilung zwischen 1-10 Gew%, bevorzugt 1,5-5 Gew%, insbesondere bevorzugt 1,5 Gew% bezogen auf das Gesamtgewicht an Holzfasern.

Im Falle einer ersten Variante einer ungleichmäßigen Verteilung des Absorptionsmittels in der Holzfasermatte kann das mindestens eine Absorptionsmittel in mindestens einer vorbestimmten Lage der Holzfasermatte verteilt bzw. angeordnet sein. Entsprechend erfolgt die Verteilung des Absorptionsmittels innerhalb einer Schicht der Holzfasermatte, aus welcher das Absorptionsmittel in die angrenzenden Bereiche innerhalb der Holzfasermatte diffundieren kann.

In dieser Variante der Verteilung des Absorptionsmittels in einer Lage bzw. Schicht in der Holzfasermatte kann die Menge des Absorptionsmittels zwischen 10 und 100 g/m², bevorzugt 30 bis 80 g/m², insbesondere bevorzugt 50 bis 60 g/m² liegen. Der Vorteil der Anordnung des Absorptionsmittels in einer Lage innerhalb der Holzfasermatte ist insbesondere der, dass die Menge an Absorptionsmittel in Abhängigkeit von Pflanzengröße und Wasserbedarf bei der Herstellung der Holzfasermatte gesteuert werden kann, und zwar in einfacher Weise über die gestreute Menge des Absorptionsmittels.

In einer weiteren, zweiten Variante der ungleichmäßigen Verteilung des Absorptionsmittels in der Holzfasermatte kann das mindestens eine Absorptionsmittel lokal begrenzt in der Holzfasermatte vorgesehen sein. Eine lokal begrenzte Anordnung des Absorptionsmittels in der Holzfasermatte erfolgt zum Beispiel in einer in die Holzfasermatte eingebrachten Vertiefung (zum Beispiel Loch, Auskerbung etc.).

In einer besonders bevorzugten Ausführungsform der vorliegenden Holzfasermatte wird als das mindestens eine Absorptionsmittel ein Polymer auf Acrylbasis verwendet. Derartige Acrylhaltige Absorptionsmittel mit Partikelgrößen zwischen 100-1000 µm sind auch als Superabsorber bekannt, die in der Lage sind, ein Vielfaches ihres Eigengewichtes an polaren Flüssigkeiten wie zum Beispiel Wasser aufzunehmen. Bei Aufnahme der Flüssigkeit quillt der Superabsorber auf und bildet ein Hydrogel.

Generell ist auch der Einsatz weiterer Absorptionsmittel wie Tonmineralien, insbesondere von Schichtsilikaten, Kieselgel oder Aluminiumoxid einsetzbar.

In einer weitergehenden Ausführungsform der vorliegenden Holzfasermatte ist das mindestens eine biologisch abbaubare Bindemittel e ein synthetisches Bindemittel.

Zur Verwendung eines synthetischen Bindemittels als biologisch abbaubares Bindemittel sind erfindungsgemäß Polylactate geeignet.

In einer besonders bevorzugten Ausführungsform werden Polymilchsäurefasern mit einer Länge 38 mm +/- 3 mm und einer Feinheit von 1,7 dtex verwendet.

Das zur Herstellung der Holzfasermatte verwendete Fasergemisch kann 60 bis 90 Gew%, bevorzugt 70 bis 80 Gew% an Holzfasern und 5 bis 20 Gew%, bevorzugt 10 bis 15 Gew%, insbesondere bevorzugt 10 Gew% an biologisch abbaubaren Bindemitteln umfassen.

Die vorliegende Holzfasermatte umfasst mindestens ein antimikrobielles Mittel. Das vorliegend zum Einsatz kommende antimikrobielle Mittel ist besonders wirksam gegen Bakterien, Hefen, Pilze oder Algen. So können als Fungizide Hinokitol oder auch Polyamine verwendet werden.

Das zum Einsatz kommende antimikrobielle Mittel dringt bevorzugt in die Zellwand der Mikroorganismen ein und fungiert als selektiver allosterischer Inhibitor von verschiedenen Enzymen, insbesondere von Enzymen der Zellwandbiosynthese oder der ribosomalen Proteinbiosynthese.

Es ist auch möglich, Desinfektionsmitteln als antimikrobielle Mittel einzusetzen. Hierzu zählen u.a. ionische Verbindungen mit antimikrobieller Wirkung, insbesondere Silber-Salze. Salze von Schwermetallen, wie z.B. Kupfer-Salze und halogenierte Substanzen sind hingegen aufgrund ihrer bekannten toxischen Wirkung von der Verwendung ausgeschlossen.

Eine weitere Alternative besteht in der Verwendung von antimikrobiell wirksamen Peptiden (AMP) oder auch Lysozym.

Das antimikrobielle Mittel wird in einer Menge zwischen 0,5-5 Gew%, bevorzugt 1-4 Gew%, insbesondere bevorzugt 2 Gew% bezogen auf die Menge an Holzfasern in der Holzfasermatte eingesetzt.

Bevorzugt wird das antimikrobielle Mittel auf die Oberseite des Faserkuchens aus Holzfasern und Bindemittel vor dem Verdichten und Kalibrieren aufgebracht. Es ist aber auch möglich und denkbar, das mindestens eine antimikrobielle Mittel direkt mit dem Gemisch aus Holzfasern, biologisch abbaubaren Bindemittel und Absorptionsmittel vor dem Auftrag auf das Transportband, d.h. vor der Ausbildung als Vorvlies in Kontakt zu bringen, z.B. durch Zugabe in der Blow-Iine.

In einer weiteren bevorzugten Ausführungsform sind in der vorliegenden Holzfasermatte Pflanzennährstoffe enthalten, die eine ausreichende Versorgung der Pflanzen mit Stickstoff, Phosphaten, Schwefel und anderen Spurenelementen gewährleisten. Eine zusätzliche Versorgung der Holzfasermatte mit Pflanzennährstoffen ist notwendig, da Holzfasern an sich einen niedrigen Nährstoffgehalt aufweisen. Allerdings bieten die Holzfasermatten den Vorteil, dass eine gezielte Einstellung des Nährstoffgehaltes durch Kalkung und Düngung möglich ist.

Die Zugabe der Pflanzennährstoffe erfolgt bevorzugt während oder im Anschluss an die Herstellung der Holzfasermatte.

Die Zugabe der Pflanzennährstoffe zu den Holzfasern kann in der Blow-Line erfolgen oder auf das Vorvlies aufgesprüht werden. Eine weitere Möglichkeit ist, dass die Nährstoffe mit dem Wasser der Pflanzmatte zugesetzt werden.

Die in der vorliegenden Holzfasermatte verwendeten Holzfasern sind trockene Holzfasern mit einer Länge von 1,0 mm bis 20 mm, bevorzugt 1,5 mm bis 10 mm und einer Dicke von 0,05 mm bis 1 mm. Die Holzfaserfeuchte der verwendeten Fasern liegt dabei in einem Bereich zwischen 5 und 15 %, bevorzugt 6 und 12 %, insbesondere bevorzugt bei 10% bezogen auf das Gesamtgewicht der Holzfasern

Die vorliegende Holzfasermatte weist eine Dicke zwischen 80 und 200 mm, bevorzugt 80 und 150 mm, insbesondere bevorzugt 80 und 100 mm auf.

Die Rohdichte der vorliegenden Holzfasermatte beträgt 50-250 kg/m³, bevorzugt 70-170 kg/m³, insbesondere bevorzugt 100-140 kgm³.

Die vorliegende Holzfasermatte weist eine Vielzahl von Vorteilen auf.

So besteht nach wie vor ein sehr großer Bedarf an erdelosen Substraten. Holzfasern haben als Substrat nachgewiesen, das sich ein hoher Grad an Lufteinschluss sehr positiv auf das Pflanzenwachstum auswirkt.

Durch die gezielte Beigabe eines Superabsorbers, der durch seine hydrophilen Komponenten gut Wasser aufnehmen kann, wird die Wasserspeicherkapazität zusätzlich erhöht.

Durch die Verwendung eines biologisch abbaubaren Bindemittel z.B. in Form von Bindemittelfasern ist eine ökologische Entsorgung möglich. Zudem kann die vorliegende Holzfasermatte für mehr als eine Wachstumsperiode eingesetzt werden, was durch die Zugabe von antimikrobiellen Mitteln unterstütz wird und wodurch die Holzfasermatte vor dem Bewuchs mit Schimmel und anderen Mikroorganismen geschützt ist.

Die vorliegende Holzfasermatte stellt somit eine ökologische und ökonomische Alternative zu den bisher nach wie vor im großen Maßstab abgebauten Torfen dar.

Wie oben ausgeführt, kann die vorliegende Holzfasermatte als Pflanzensubstrat bzw. Substratkomponente in der Landwirtschaft oder im Gartenbau zum Einsatz kommen. Insbesondere eine Verwendung der Holzfasermatte zur Dachbegrünung oder auch zur Pflanzenaufzucht ist vorstellbar.

Soll die vorliegende Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht. In diese Vertiefung werden Samen o.ä. in Verbindung mit Wasser und ggf. mit dem Absorptionsmittel wie einem Superabsorbergranulat eingefügt, wobei das sich in der Vertiefung befindliche und/oder der Holzfasermatte eingebaute Absorptionsmittel das Wasser absorbiert und dem Samen zur Verfügung stellt (Phase A). Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

Eine erste Ausführungsform der vorliegenden Holzfasermatte, insbesondere mit einer gleichmäßigen Verteilung des Absorptionsmittels in der Holzfasermatte, kann in einem Verfahren mit den folgenden Schritten hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, der Mischung aus Holzfasern und dem mindestens einem zur Vernetzung der Holzfasern geeigneten biologisch abbaubaren Bindemittel auf ein erstes Transportband unter Ausbildung eines Vorvlieses,
   c1) Verteilen bzw. Aufstreuen von mindestens einem Absorptionsmittel auf das Vorvlies,
   c2) Zerfasern des Vorvlieses, Vermischung und Aufbringen der Fasermischung auf ein zweites Transportband unter Ausbildung eines Faserkuchens
d) Aufsprühen von mindestens einem antimikrobiellen Mittel auf den Faserkuchen, insbesondere die Oberseite des Faserkuchens, und
e) Erwärmen und Verdichten des Faserkuchens zu einer Holzfasermatte.

Zur Herstellung der Holzfasern gemäß Schritt a) werden die Holzhackschnitzel zunächst gereinigt, anschließend zerfasert und getrocknet.

Das In-Kontaktbringen der Holzfasern mit dem mindestens einen Bindemittel in Schritt b) erfolgt bevorzugt in einem Blow-Line-Verfahren, bei dem das Bindemittel in den Holzfaserstrom eingespritzt wird. Hierbei ist es möglich, dass die beschriebenen Bindemittel zur Holzfaservernetzung in der Blow-Line einem Holzfaser-Dampfgemisch zugeführt werden. Im Falle der Verwendung von Bindemittel-Fasern werden diese hingegen den trockenen Holzfasern zugemischt.

Es ist ebenfalls vorstellbar, dass mehr als ein Bindemittel zur Vernetzung der Holzfasern verwendet werden. So können Gemische aus natürlichen und synthetisch biologisch abbaubaren Bindemitteln verwendet werden.

Es ist auch denkbar, das Bindemittel zur Vernetzung der Holzfasern während des Dämpfens der Hackschnitzel einzuführen oder im Refiner zuzugeben. Dabei können 5 bis 20 Gew%, bevorzugt 10 bis 15 Gew % an Bindemittel auf die Holzfasern aufgetragen werden.

Es ist aber auch denkbar, das Bindemittel mittels Trockenbeleimung mit den Holzfasern in Kontakt zu bringen. Das Bindemittel wird hier durch extrem feines Verdüsen auf die getrockneten Holzfasern aufgebracht. Eine derartige Trockenbeleimung reduziert den Leimverbrauch gegenüber einer Blow-Line-Beleimung drastisch.

Gemäß der oben beschriebenen Variante des Herstellungsverfahrens können die Holzfasern und das biologisch abbaubare Bindemittel z.B. in Form von Bindefasern wie PLA-Fasern über einer Blasleitung geführt und auf ein erstes Transportband aufgeblasen werden. In der Blasleitung erfolgt dabei eine intensive Vermischung von Holzfasern und Bindemittel und gegebenenfalls weiteren Komponenten durch die eingeblasene Luft als Transportmittel. Die Menge an zugeführtem Fasergemisch richtet sich nach der gewünschten Schichtdicke und der gewünschten Rohdichte der herzustellenden Holzfasermatte.

Nach Ablage der Mischung aus Holzfasern und Bindemittel und gegebenenfalls weiteren Komponenten auf dem ersten Transportband wird vorliegend unter Verwendung eines Pulverstreuers (Hersteller: z.B. Fa. TPS) das mindestens eine Absorptionsmittel in Form eines Copolymers aus Acrylamid und Kaliumacrylat auf das gebildete Vorvlies aufgestreut. Am Ende des ersten Transportbandes wird das mit dem Absorptionsmittel versetzte Vorvlies zerfasert und nach nochmaliger Vermischung auf ein zweites Transportband aufgeblasen. Die Dicke der erhaltenen Matte wird dabei durch die Umlaufgeschwindigkeit des zweiten Transportbandes eingestellt.

Der so erhaltene Faserkuchen wird bevorzugt auf der Oberseite mit mindestens einem antimikrobiellen Mittel versehen und anschließend in einen Ofen überführt, in welchem die abschließende Kalibrierung und/oder Verdichtung erfolgt.

Der Schritt des Verdichtens erfolgt erfindungsgemäß bei Temperaturen zwischen 120°C und 220°C, bevorzugt 150°C und 200°C, insbesondere 170 °C und 180°C, wobei der Faserkuchen auf eine Dicke zwischen 80 und 200 mm, bevorzugt 80 und 150mm, insbesondere bevorzugt 80 und 100 mm verdichtet wird.

In der Endbearbeitung wird die Fasermatte schließlich auf die gewünschten Maße reduziert und gekühlt; die Kühlung erfolgt bevorzugt während der Kalibrierung und in der Kühlzone des Durchlaufofens.

Eine weitere zweite nicht erfindungsgemäße Variante der vorliegenden Holzfasermatte, insbesondere eine Variante mit einer begrenzten Verteilung des Absorptionsmittels auf eine Schicht bzw. Lage innerhalb der Holzfasermatte, kann in einem weiteren modifizierten Verfahren mit den folgenden Schritten hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, einer ersten Menge einer Mischung aus Holzfasern und dem mindestens einem zur Vernetzung der Holzfasern geeigneten biologisch abbaubaren Bindemittel auf ein Transportband unter Ausbildung eines Vorvlieses,
   c1) Verteilen bzw. Aufstreuen des mindestens einen Absorptionsmittels auf das Vorvlies aus Holzfasern und Bindemittel;
   c3) Aufbringen einer zweiten Menge einer Mischung aus Holzfasern und dem mindestens einem zur Vernetzung der Holzfasern geeigneten biologisch abbaubaren Bindemittel unter Ausbildung eines Faserkuchens,
d) Aufsprühen von mindestens einem antimikrobiellen Mittel auf den Faserkuchen, und
e) Erwärmen und Verdichten des Faserkuchens zu einer Holzfasermatte.

Gemäß dieser Verfahrensvariante wird demnach zunächst eine erste Lage eine Fasergemisches aus Holzfasern und Bindemittel (z.B. in einer Menge zwischen 1000 und 2000 g/m², bevorzugt 1500 g/m²) auf das Transportband aufgeblasen oder aufgestreut, anschließend das Absorptionsmittel als zweite Lage auf dieses Fasergemisch oder auch Vorvlies aufgebracht und anschließend eine weitere, dritte Lage eines Fasergemisches aus Holzfasern und Bindemittel (z.B. in einer Menge zwischen 2000 und 3000 g/m², bevorzugt 2500 g/m²) auf das Vorvlies aufgebracht. Entsprechend ist das Absorptionsmittel in diesem Fall als zweidimensionale Lage oder Schicht innerhalb der Holzfasermatte eingetragen, wodurch eine inhomogene Verteilung des Absorptionsmittels in der Holzfasermatte bewirkt wird. Aufgrund dieser spezifischen schichtförmigen Anordnung des Absorptionsmittels ist die Konzentration desselbigen innerhalb der Holzfasermatte lokal erhöht.

Eine dritte Variante der vorliegenden Holzfasermatte, insbesondere mit einer lokal begrenzten Anordnung bzw. Aufnahme des Absorptionsmittels innerhalb der Holzfasermatte, kann mit dem folgenden Verfahren hergestellt werden:
a) Herstellen von Holzfasern aus lignozellulosehaltigem Ausgangsmaterial, wie z.B. aus Holzhackschnitzeln,
b) In-Kontaktbringen der Holzfasern mit mindestens einem zur Vernetzung der Holzfasern geeigneten biologisch abbaubaren Bindemittel,
c) Aufbringen, z.B. Aufstreuen oder Aufblasen, einer Mischung aus Holzfasern und dem mindestens einem zur Vernetzung der Holzfasern geeigneten biologisch abbaubaren Bindemittel auf ein Transportband unter Ausbildung eines Faserkuchens,
d) Aufsprühen von mindestens einem antimikrobiellen Mittel auf den Faserkuchen,
e) Erwärmen und Verdichten des Faserkuchens zu einer Holzfasermatte,
f) optional Konfektionierung der Holzfasermatte (Besäumen, Zuschneiden);
g) Einfügen von mindestens einer Vertiefung in die Holzfasermatte, und
h) Einbringen des mindestens einen Absorptionsmittels in die Vertiefung, insbesondere zusammen mit einem Pflanzensamen oder einer Jungpflanze.

In dieser Verfahrensvariante wird demnach das Absorptionsmittel erst nach dem Verpressen bzw. Verdichten in die Matte an einer vorbestimmten Lokalisation eingebracht. Der Vorteil dieser Variante besteht darin, dass die Holzfasermatte während der Lagerung und somit vor der eigentlichen Benutzung als Substratkomponente keine unnötige Feuchtigkeit aufnimmt und somit eventuelle Schimmel- oder Verrottungsprozesse der Holzfasermatte aufgrund eines erhöhten Feuchtigkeitsgehaltes vermieden werden.

Pro Vertiefung bzw. Loch kann die Menge an eingebrachten Absorptionsmittel zwischen 1 und 50 g, bevorzugt zwischen 1 und 20 g, insbesondere bevorzugt zwischen 1 und 10 g betragen. Auch hier ist die Menge von der Pflanzengröße, der Größe der Vertiefung und dem Wasserbedarf abhängig.

Die Erfindung wird nachfolgend unter Bezugnahme auf die Figuren der Zeichnungen an mehreren Ausführungsbeispielen näher erläutert. Es zeigen:
- Figur 1: eine schematische Darstellung der Verwendung einer ersten Ausführungsform der erfindungsgemäßen Holzfasermatte;
- Figur 2: eine schematische Darstellung der Verwendung einer zweiten nicht erfindungsgemäßen Ausführungsform der Holzfasermatte; und
- Figur 3: eine schematische Darstellung der Verwendung einer dritten Ausführungsform der erfindungsgemäßen Holzfasermatte;

### Ausführungsbeispiel 1: Holzfasermatte mit gleichmäßiger Verteilung des Absorptionsmittels

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Aus den Fasern wird durch Aufblasen auf ein Transportband eine Matte erzeugt. Über einen Pulverstreuer wird Accepta 4303 zu dosiert (1,5 Gew% bezogen auf Fasern). Bei dem Produkt handelt es sich um ein Copolymer aus Acrylamid und Kaliumacrylat.

Danach erfolgen eine nochmalige Vermischung und ein Ablegen auf ein Transportband. Es werden ca. 4000 g Fasern/m² gestreut. Danach werden auf den Faserkuchen auf der Oberseite mit Hilfe einer Besprühungsapparatur ca. 2 Gew% von PAT 964 Ecoban als antimikrobielles Mittel aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet. Aus der Endlosfaser-Matte werden Zuschnitte oder Rollenware erzeugt.

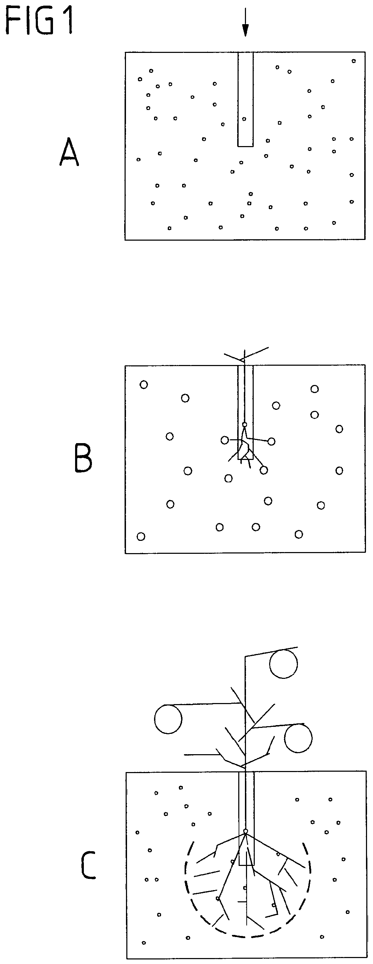

Soll die so hergestellte Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht (siehe Figur 1).

In diese Vertiefung werden Samen o.ä. in Verbindung mit Wasser eingefügt (Phase A), wobei das in der Holzfasermatte gleichmäßig verteilte Absorptionsmittel das Wasser absorbiert und dem Samen zur Verfügung stellt. Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

### Ausführungsbeispiel 2: Nicht erfindungsgemäße Holzfasermatte mit Anordnung des Absorptionsmittels als separate Lage

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Auf ein Transportband werden 1500 g Fasern/m² gestreut. Über einen Pulverstreuer wird Accepta 4303 zu dosiert (1,5 Gew.% bezogen auf Fasern). Danach werden auf die bereits vorhandene Matte nochmals 2500 g Fasern/m² aufgebracht.

Danach werden auf den Faserkuchen auf der Oberseite mit Hilfe einer Besprühungsapparatur ca. 2 Gew. % von PAT 964 Ecoban aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet. Aus der Endlosfaser-Matte werden Zuschnitte oder Rollenware erzeugt.

Eine Probe aus diesem Anwendungsbeispiel wurde zusammen mit einer Nullprobe (ohne Ecoban) in einem Exsikkator bei 100 % rel. Luftfeuchte über zwei Monate gelagert. Im Wochenrhythmus wurde auf Schimmel geprüft. Bei der Nullprobe war nach vier Wochen eine deutliche Schimmelbildung zu beobachten. Bei der Probe aus dem Versuch war selbst nach zwei Monaten keine Schimmelbildung erkennbar.

| | Nullprobe | Probe aus Ausführungsbeispiel 2 |
|---|---|---|
| Schimmelbildung | Nach vier Wochen deutlich sichtbare Schimmelbildung | Nach acht Wochen keine Schimmelbildung |

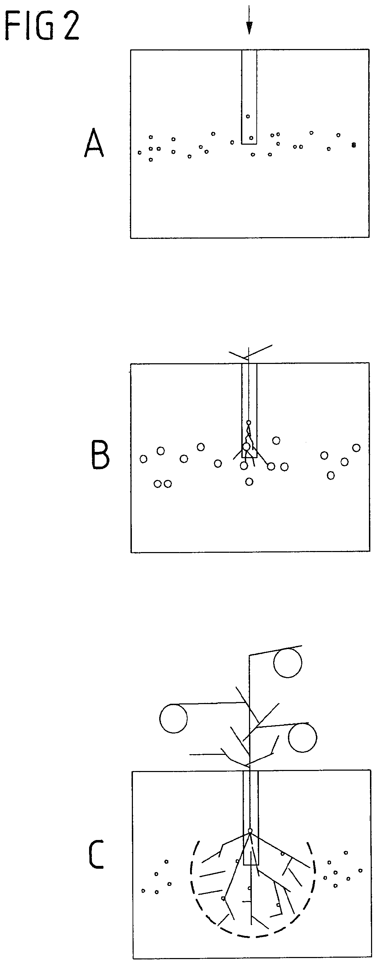

Soll die so hergestellte Holzfasermatte nun z.B. zur Aufzucht von Pflanzenkeimlingen verwendet werden, wird zunächst eine geeignete Vertiefung oder Auskerbung z.B. ein Loch mit einer vorbestimmten Tiefe in die Holzfasermatte eingebracht (siehe Figur 2).

In diese Vertiefung werden Samen o.ä. in Verbindung mit Wasser eingefügt (Phase A), wobei das in der Holzfasermatte gleichmäßig verteilte Absorptionsmittel das Wasser absorbiert und dem Samen zur Verfügung stellt. Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

### Ausführungsbeispiel 3: Holzfasermatte mit lokaler Anordnung des Absorptionsmittels in einer Vertiefung

In einem Refiner werden aus Hackschnitzeln Holzfasern hergestellt, welche anschließend auf eine Feuchte von ca. 10% getrocknet werden.

Diese Holzfasern werden anschließend in einem Fasermischer mit Polymilchsäurefasern vermischt (Anteil Polymilchsäurefasern: ca. 10%). Die PLA-Fasern haben eine Länge von 38 mm +/-3 mm und eine Feinheit von 1,7 dtex. Aus den Fasern wird durch Aufblasen auf ein Transportband eine Matte erzeugt. Es werden ca. 4000 g Fasern/m² gestreut.

Danach werden auf den Faserkuchen auf der Oberseite mit Hilfe einer Besprühungsapparatur ca. 2 Gew. % von PAT 964 Ecoban aufgesprüht.

Der Faserkuchen wird dann in einem Ofen auf Temperaturen von 170-180°C erwärmt und verdichtet. Die Geschwindigkeit des Transportbandes lag bei 10 m/min. Am Ende des Ofens ist die Matte auf 80 mm verdichtet.

Aus der Endlosfaser-Matte werden Zuschnitte oder Rollenware erzeugt. Nach der Platzierung der Matten in einem Gewächshaus, wird je nach Pflanzenart und gewünschtem Bewuchs in ein Loch in der Pflanzmatte die gewünschte/benötigte Menge Superabsorber zusammen mit dem Samen der Pflanze oder der Jungpflanze eingebracht. Es handelt sich dabei wieder um Accepta 4303. Bei dem Produkt handelt es sich um ein Copolymer aus Acrylamid und Kaliumacrylat.

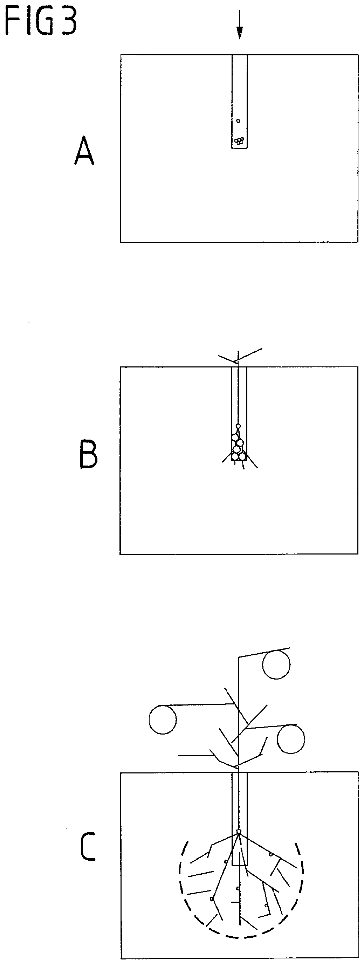

Soll die vorliegende Holzfasermatte nun z.B. zur Aufzucht von Pflanzenkeimlingen verwendet werden, wird in die bereits gefertigte Vertiefung bzw. Loch zusätzlich zum Absorptionsmittel der Samen mit Wasser eingebracht (siehe Figur 3), wobei das sich in der Vertiefung befindliche und/oder der Holzfasermatte eingebaute Absorptionsmittel das Wasser absorbiert und dem Samen zur Verfügung stellt (Phase A). Unter adäquaten äußeren Bedingungen (z.B. moderate Temperaturen) kommt es zur Keimung des Samen unter Ausbildung von ersten Wurzeln (Phase B) und zum Wachstum bis zur Ausbildung einer vollentwickelten Pflanze, wobei das Absorptionsmittel im Wurzelwerk das notwendige Wasser zur Verfügung stellt (Phase C).

## Patentansprüche

1. Holzfasermatte mit einer Rohdichte von 50 bis 250 kg/m³ und einer Dicke zwischen 80 und 200 mm zur Verwendung als Pflanzensubstrat
umfassend Holzfasern,
- Polylactate als mindestens ein biologisch abbaubares Bindemittel,
- ein Copolymer aus Acrylamid und Kaliumacrylat als mindestens ein Mittel zur Absorption einer polaren Flüssigkeit, insbesondere Wasser, **gekennzeichnet durch**
mindestens ein antimikrobielles Mittel in einer Menge zwischen 0,5-5 Gew% bezogen auf die Menge an Holzfasern in der Holzfasermatte.

2. Holzfasermatte nach Anspruch 1, **dadurch gekennzeichnet, dass** das mindestens eine antimikrobielle Mittel in einer Menge zwischen 1-4 Gew%, insbesondere bevorzugt 2 Gew% bezogen auf die Menge an Holzfasern in der Holzfasermatte eingesetzt wird.

3. Holzfasermatte nach Anspruch 1 oder 2, **dadurch gekennzeichnet, dass** das mindestens eine antimikrobielle Mittel wirksam gegen Bakterien, Hefen, Pilze oder Algen ist.

4. Holzfasermatte nach einem der vorhergehenden Ansprüche, **dadurch gekennzeichnet, dass** das mindestens eine antimikrobielle Mittel Hinokitol oder ein Polyamin ist.

5. Holzfasermatte nach einem der vorhergehenden Ansprüche, **dadurch gekennzeichnet, dass** die Menge des mindestens einen Absorptionsmittels in der finalen Holzfasermatte bei einer gleichmäßigen Verteilung zwischen 1-10 Gew%, bevorzugt 1,5-5 Gew%, insbesondere bevorzugt 1,5 Gew% bezogen auf das Gesamtgewicht an Holzfasern beträgt.

6. Holzfasermatte nach einem der vorhergehenden Ansprüche, **dadurch gekennzeichnet, dass** das mindestens eine Absorptionsmittel in mindestens einer vorbestimmten Lage der Holzfasermatte in einer Menge des Absorptionsmittels zwischen 10 und 100 g/m², bevorzugt 30 bis 80 g/m², insbesondere bevorzugt 50 bis 60 g/m² verteilt ist.

7. Holzfasermatte nach einem der vorhergehenden Ansprüche, **dadurch gekennzeichnet, dass** das mindestens eine biologisch abbaubare Bindemittel ein synthetisches Bindemittel in Form von Polymilchsäurefasern mit einer Länge 38 mm +/- 3 mm und einer Feinheit von 1,7 dtex ist.

8. Holzfasermatte nach einem der vorhergehenden Ansprüche, **gekennzeichnet durch** eine Rohdichte zwischen 70-170 kg/m³, insbesondere bevorzugt zwischen 100-140 kgm³.

9. Holzfasermatte nach einem der vorhergehenden Ansprüche, **gekennzeichnet durch** eine Dicke zwischen 80 und 150 mm, insbesondere bevorzugt 80 und 100 mm.

10. Holzfasermatte nach einem der vorhergehenden Ansprüche, **dadurch gekennzeichnet, dass** in der Holzfasermatte Pflanzennährstoffe enthalten sind.

11. Verwendung einer Holzfasermatte nach einem der vorhergehenden Ansprüche als Pflanzensubstrat.

12. Verfahren zur Herstellung einer Holzfasermatte nach einem der Ansprüche 1-5 und 7-10 umfassend die Schritte:
a) Herstellen von Holzfasern aus lignozellulosehaltigem Ausgangsmaterial,
b) In-Kontaktbringen der Holzfasern mit mindestens einem zur Vernetzung der Holzfasern geeigneten biologisch abbaubaren Bindemittel in Form von Polylactaten,
c) Aufbringen der Mischung aus Holzfasern und dem mindestens einem zur Vernetzung der Holzfasern geeigneten biologisch abbaubaren Bindemittel auf ein erstes Transportband unter Ausbildung eines Vorvlieses,
c1) Verteilen bzw. Aufstreuen von mindestens einem Absorptionsmittel in Form eines Copolymers aus Acrylamid und Kaliumacrylat auf das Vorvlies,
c2) Zerfaserung des Vorvlieses, Vermischung und Aufbringen der Fasermischung auf ein zweites Transportband unter Ausbildung eines Faserkuchens
d) Aufsprühen von mindestens einem antimikrobiellen Mittel auf den Faserkuchen, insbesondere die Oberseite des Faserkuchens, und
e) Erwärmen und Verdichten des Faserkuchens zu einer Holzfasermatte bei Temperaturen zwischen 120 und 220°C.

13. Verfahren zur Herstellung einer Holzfasermatte nach einem der Ansprüche 1-4 und 7-10 umfassend die Schritte:
a) Herstellen von Holzfasern aus lignozellulosehaltigem Ausgangsmaterial,
b) In-Kontaktbringen der Holzfasern mit mindestens einem zur Vernetzung der Holzfasern geeigneten biologisch abbaubaren Bindemittel in Form von Polylactaten;
c) Aufbringen einer Mischung aus Holzfasern und dem mindestens einem zur Vernetzung der Holzfasern geeigneten biologisch abbaubaren Bindemittel auf ein Transportband unter Ausbildung eines Faserkuchens,
d) Aufsprühen von mindestens einem antimikrobiellen Mittel auf den Faserkuchen, insbesondere die Oberseite des Faserkuchens, und
e) Erwärmen und Verdichten des Faserkuchens zu einer Holzfasermatte,
f) optional Konfektionieren der Holzfasermatte;
g) Einfügen von mindestens einer Vertiefung in die Holzfasermatte, und
h) Einbringen des mindestens einen Absorptionsmittels in Form eines Copoylmers aus Acrylamid und Kaliumacrylat in die Vertiefung, insbesondere zusammen mit einem Pflanzensamen oder einer Jungpflanze.

14. Verfahren nach einem der Ansprüche 12 bis 13, **dadurch gekennzeichnet, dass** die Zugabe von Pflanzennährstoffen während der Herstellung der Holzfasermatte in der Blow-Line erfolgt.

## Claims

1. Wood fibre mat with a bulk density of 50 to 250 kg/m³ and a thickness between 80 and 200 mm for use as a plant substrate
comprising wood fibres,
- Polylactates as at least one biodegradable binder,
- a copolymer of acrylamide and potassium acrylate as at least one means for absorbing a polar liquid, in particular water, **characterized by**
at least one antimicrobial agent in an amount between 0.5-5% by weight based on the amount of wood fibres in the wood fibre mat.

2. Wood fibre mat according to claim 1, **characterised in that** the at least one antimicrobial agent is used in an amount between 1-4% by weight, in particular preferably 2% by weight, relative to the amount of wood fibres in the wood fibre mat.

3. Wood fibre mat according to claim 1 or 2, **characterised in that** the at least one antimicrobial agent is effective against bacteria, yeasts, fungi or algae.

4. Wood fibre mat according to one of the preceding claims, **characterised in that** the at least one antimicrobial agent is hinokitol or a polyamine.

5. Wood fibre mat according to one of the preceding claims, **characterised in that** the amount of the at least one absorption means in the final wood fibre mat, when evenly distributed, is between 1-10 wt%, preferably 1.5-5 wt%, more preferably 1.5 wt% based on the total weight of wood fibres.

6. Wood fibre mat according to one of the preceding claims, **characterised in that** the at least one absorption means is distributed in at least one predetermined layer of the wood fibre mat in an amount of the absorption means between 10 and 100 g/m², preferably 30 to 80 g/m², more preferably 50 to 60 g/m².

7. Wood fibre mat according to one of the preceding claims, **characterised in that** the at least one biodegradable binder is a synthetic binder in the form of polylactic acid fibres having a length of 38 mm +/- 3 mm and a fineness of 1.7 dtex.

8. Wood fibre mat according to one of the preceding claims, **characterised by** a bulk density between 70-170 kg/m³, in particular preferably between 100-140 kgm³.

9. Wood fibre mat according to one of the preceding claims, **characterised by** a thickness between 80 and 150 mm, in particular preferably 80 and 100 mm.

10. Wood fibre mat according to one of the preceding claims, **characterised in that** plant nutrients are contained in the wood fibre mat.

11. Use of a wood fibre mat according to one of the preceding claims as a plant substrate.

12. A method of manufacturing a wood fibre mat according to one of claims 1-5 and 7-10 comprising the steps of:
a) production of wood fibres from lignocellulose containing starting material,
b) bringing the wood fibres into contact with at least one biodegradable binder in the form of polylactates suitable for cross-linking the wood fibres,
c) applying the mixture of wood fibres and the at least one biodegradable binder suitable for cross-linking the wood fibres to a first conveyor belt, forming a preliminary web,
c1) distribution or scattering at least one absorption means in the form of a copolymer of acrylamide and potassium acrylate onto the preliminary web,
c2) Defibration of the preliminary web, mixing and application of the fibre mixture onto a second conveyor belt with the formation of a fibre cake.
d) spray-application of at least one antimicrobial agent onto the fibre cake, in particular the upper side of the fibre cake, and
e) Heating and compacting the fibre cake into a wood fibre mat at temperatures between 120 and 220°C.

13. A method of manufacturing a wood fibre mat according to one of claims 1-4 and 7-10 comprising the steps of:
a) production of wood fibres from lignocellulose containing starting material,
b) bringing the wood fibres into contact with at least one biodegradable binder in the form of polylactates suitable for cross-linking the wood fibres;
c) applying a mixture of wood fibres and the at least one biodegradable binder suitable for cross-linking the wood fibres to a conveyor belt to form a fibre cake,
d) spray-application at least one antimicrobial agent onto the fibre cake, in particular the upper side of the fibre cake, and
e) Heating and compacting the fibre cake into a wood fibre mat,
f) optional subjecting the wood fibre mat to further operations;
g) introduction of at least one depression in the wood fibre mat; and
h) introducing the at least one absorption means in the form of a copoylmer of acrylamide and potassium acrylate into the depression, in particular together with a plant seed or a seedling.

14. A method according to one of claims 12 to 13, **characterised in that** the addition of plant nutrients takes place during the production of the wood fibre mat in the blow line.

## Revendications

1. Tapis de fibres de bois présentant une masse volumique apparente allant de 50 à 250 kg/m³ destiné à être utilisé en tant que substrat végétal,
comprenant des fibres de bois,
- au moins un liant biodégradable,
- au moins un moyen d'absorption d'un liquide polaire, en particulier d'eau, **caractérisé par**
au moins un agent antimicrobien en une quantité comprise entre 0,5 et 5 % en poids par rapport à la quantité de fibres de bois dans le tapis de fibres de bois.

2. Tapis de fibres de bois selon la revendication 1, **caractérisé en ce que** l'au moins un agent antimicrobien est utilisé en une quantité comprise entre 1 et 4 % en poids, en particulier de manière préférée de 2 % en poids par rapport à la quantité de fibres de bois dans le tapis de fibres de bois.

3. Tapis de fibres de bois selon la revendication 1 ou 2, **caractérisé en ce que** l'au moins un agent antimicrobien est particulièrement actif contre des bactéries, des levures, des champignons ou des algues.

4. Tapis de fibres de bois selon l'une quelconque des revendications précédentes, **caractérisé en ce que** l'au moins un agent antimicrobien est de l'hinokitiol ou une polyamine.

5. Tapis de fibres de bois selon l'une quelconque des revendications précédentes, **caractérisé en ce que** la quantité de l'au moins un agent d'absorption dans le tapis de fibres de bois final présente, dans le cas d'une répartition homogène, une valeur comprise entre 1 et 10 % en poids, de manière préférée entre 1,5 et 5 % en poids, en particulier de manière préférée de 1,5 % en poids par rapport au poids total de fibres de bois.

6. Tapis de fibres de bois selon l'une quelconque des revendications précédentes, **caractérisé en ce que** l'au moins un agent d'absorption est réparti dans au moins une couche prédéfinie du tapis de fibres de bois en une quantité comprise entre 10 et 100 g/m², de manière préférée de 30 à 80 g/m², en particulier de manière préférée de 50 à 60 g/m².

7. Tapis de fibres de bois selon l'une quelconque des revendications précédentes, **caractérisé en ce que** l'au moins un liant biodégradable est un liant synthétique se présentant sous la forme de fibres d'acide polylactique présentant une longueur de 38 mm +/- 3 mm et une finesse de 1,7 dtex.

8. Tapis de fibres de bois selon l'une quelconque des revendications précédentes, **caractérisé par** une masse volumique apparente comprise entre 70 et 170 kg/m³, en particulier de manière préférée comprise entre 100 et 140 kg/m³.

9. Tapis de fibres de bois selon l'une quelconque des revendications précédentes, **caractérisé par** une épaisseur comprise entre 20 et 200 mm, de manière préférée entre 50 et 150 mm, en particulier de manière préférée comprise entre 80 et 100 mm.

10. Tapis de fibres de bois selon l'une quelconque des revendications précédentes, **caractérisé en ce que** des substances nutritives pour plantes sont contenues dans le tapis de fibres de bois.

11. Utilisation d'un tapis de fibres de bois selon l'une quelconque des revendications précédentes en tant que substrat végétal.

12. Procédé servant à fabriquer un tapis de fibres de bois selon l'une quelconque des revendications 1 à 5 et 7 à 10, comprenant les étapes consistant à :
a) fabriquer des fibres de bois à partir d'un matériau de départ contenant de la lignocellulose ;
b) amener en contact les fibres de bois avec au moins un liant biodégradable adapté pour la réticulation des fibres de bois ;
c) appliquer le mélange composé des fibres de bois et de l'au moins un liant biodégradable adapté pour la réticulation des fibres de bois sur une première bande transporteuse en réalisant un pré-matériau non tissé ;
c1) répartir ou disperser au moins un agent d'absorption sur le pré-matériau non tissé ;
c2) défibrer le pré-matériau non tissé, mélanger et appliquer le mélange de fibres sur une deuxième bande transporteuse en réalisant un gâteau de fibres ;
d) pulvériser au moins un agent antimicrobien sur le gâteau de fibres, en particulier sur le côté supérieur du gâteau de fibres ; et
e) chauffer et compacter le gâteau de fibres en un tapis de fibres de bois.

13. Procédé servant à fabriquer un tapis de fibres de bois selon l'une quelconque des revendications 1 à 4 et 7 à 10, comprenant les étapes consistant à :
a) fabriquer des fibres de bois à partir d'un matériau de départ contenant de la lignocellulose ;
b) amener en contact les fibres de bois avec au moins un liant biodégradable adapté à la réticulation des fibres de bois ;
c) appliquer un mélange composé des fibres de bois et de l'au moins un liant biodégradable adapté à la réticulation des fibres de bois sur une bande transporteuse en réalisant un gâteau de fibres ;
d) pulvériser au moins un agent antimicrobien sur le gâteau de fibres, en particulier le côté supérieur du gâteau de fibres ; et
e) chauffer et compresser le gâteau de fibres en un tapis de fibres de bois ;
f) en option, confectionner le tapis de fibres de bois ;
g) pratiquer au moins un renfoncement dans le tapis de fibres de bois ; et
h) introduire l'au moins un agent d'absorption dans le renfoncement, en particulier conjointement avec une graine de plante ou un jeune plant.

14. Procédé selon l'une quelconque des revendications 12 à 13, **caractérisé en ce que** l'ajout de substances nutritives pour plantes a lieu au cours de la fabrication du tapis de fibres de bois dans la ligne de soufflage.
